# EUROPÄISCHE PATENTANMELDUNG

(11) **EP 2 293 405 A1**
(43) Veröffentlichungstag der Anmeldung: **09.03.2011**
(21) Anmeldenummer: 09011404.2
(22) Anmeldetag: 05.09.2009
(51) Int. Cl.: H02J 1/14, B60P 3/36

(54) **Freizeitfahrzeug**

(71) Anmelder: Hobby-Wohnwagenwerk Ing. Harald Striewski GmbH, 24787 Fockbek (DE)
(72) Erfinder: Striewski, Harald, 24813 Schülp (DE)
(74) Vertreter: Stenger, Watzke & Ring

(57) **Zusammenfassung**

Die vorliegende Erfindung betrifft ein Freizeitfahrzeug mit einer elektrischen Anlage (10), die wenigstens eine Energiequelle (12, 14), mehrere Verbraucher (16, 18) sowie ein Energieverteilungsnetz (20) aufweist, an welchem Energieverteilungsnetz (20) die Energiequelle (12, 14) und die Verbraucher (16, 18) angeschlossen sind und dass eine Steuereinheit (22) zum Steuern des Energieflusses von der Energiequelle (12, 14) zu wenigstens einem der Verbraucher (16, 18) aufweist, welche Steuereinheit (22) mittels einem mit der Steuereinheit (22) in Kommunikationsverbindung stehenden Betätigungselement steuerbar ist. Mit der Erfindung wird vorgeschlagen, dass die elektrische Anlage (10) eine mit der Steuereinheit (22) in Kommunikationsverbindung stehende Anlagenüberwachungseinrichtung (26) aufweist, die die Energiebereitstellung durch die Energiequelle (12, 14) und/oder den Energieverbrauch durch die Verbraucher (16, 18) betreffende Zustandsgröße überwacht und die Steuereinheit (22) mittels eines Vorrangsignals vorrangig steuert.

## Beschreibung

Die vorliegende Erfindung betrifft ein Freizeitfahrzeug, beispielsweise einen Caravan oder ein Wohnmobil mit einer elektrischen Anlage, die wenigstens eine Energiequelle, mehrere Verbraucher sowie ein Energieverteilungsnetz aufweist, an welchem Energieverteilungsnetz die Energiequelle und die Verbraucher angeschlossen sind und dass eine Steuereinheit zum Steuern des Energieflusses von der Energiequelle zu wenigstens einem der Verbraucher aufweist, welche Steuereinheit mittels einem mit der Steuereinheit in Kommunikationsverbindung stehenden Betätigungselement steuerbar ist.

Gattungsgemäße Freizeitfahrzeuge finden Einsatz sowohl im Freizeitbereich als auch im gewerblichen Bereich, wobei mittels des Freizeitfahrzeugs eine Unterkunft für eine oder mehrere Personen bereitgestellt werden soll, die in flexibler Weise bedarfsgerecht an unterschiedliche Orte ohne großen Montageaufwand und Transportaufwand verbracht werden kann. Freizeitfahrzeuge im Sinne der Erfindung sind solche mit eigenem Antrieb oder auch ohne eigenen Antrieb, das heißt Freizeitfahrzeuge, die zu Transportzwecken mit anderen Fahrzeugen gekoppelt werden, wie Wohnanhänger oder dergleichen. Das Freizeitfahrzeug weist einen Wohnaufbau auf, der es ermöglicht, eine wohnungsähnliche Unterkunft bereitzustellen.

Moderne Freizeitfahrzeuge lassen kaum Komfort-Wünsche offen, obwohl aufgrund ihrer Mobilität besondere Anforderungen und Bedingungen zu berücksichtigen sind, die eine Übertragung der Technik von Installationen von stationären Wohnungseinrichtungen nicht erlauben. Trotzdem weisen die Freizeitfahrzeuge Installationen für Wasser, Gas, elektrische Energie, Abwasser und dergleichen auf, wie sie auch aus stationären Wohnungseinrichtungen bekannt und gebräuchlich sind.

Das Freizeitfahrzeug weist eine elektrische Anlage auf, die neben einer Energiequelle elektrische Verbraucher umfasst, beispielsweise Haushaltsgeräte, Konsumgeräte, elektrische Heizungen, Warmwassergeräte und/oder dergleichen. Die elektrische Energiequelle stellt die für die Verbraucher erforderliche elektrische Energie bereit. Zur Übertragung der Energie von der Energiequelle an die Verbraucher weist die elektrische Anlage ein Energieverteilungsnetz auf, an welchem die Energiequelle und die Verbraucher angeschlossen sind. Ferner weist die elektrische Anlage eine Steuereinheit zum Steuern des Energieflusses von der Energiequelle zu wenigstens einem der Verbraucher auf. Die Steuereinheit ist mittels einem mit der Steuereinheit in Kommunikationsverbindung stehenden Betätigungselement steuerbar. Ein derartiges Freizeitfahrzeug ist zum Beispiel durch die EP 1 859 989 A1 offenbart.

Für eine zuverlässige Funktion der Verbraucher ist es erforderlich, dass diese für ihren bestimmungsgemäßen Betrieb hinreichend und zuverlässig mit elektrischer Energie versorgt werden. Gerade bei Freizeitfahrzeugen tritt häufig das Problem auf, dass die Energiequelle eine lokale Energiequelle ist, beispielsweise ein Solar-Panel, ein Windrad, ein motorbetriebenes Stromaggregat oder dergleichen. Derartige Energiequellen sind hinsichtlich ihrer Leistung sowie auch der Konstanz der Leistungsbereitstellung begrenzt. Darüber hinaus kann die Leistung auch von äußeren Faktoren, wie beispielsweise Sonneneinstrahlung bei einem Solar-Pendel, Windgeschwindigkeit bei einem Windrad, Umgebungstemperatur oder dergleichen abhängig sein.

Ist die Energiebilanz, das heißt, die Differenz aus durch die Energiequelle bereitgestellter elektrischer Energie minus der durch die Verbraucher verbrauchten elektrischen Energie, negativ, besteht die Gefahr, dass die Energieversorgung zusammenbricht, zumindest jedoch, dass Funktionsstörungen bei den Verbrauchern die Folge sein können. Im umgekehrten Fall können ebenfalls Probleme im Energieverteilungsnetz und an den angeschlossenen Verbrauchern sowie der Energiequelle auftreten, beispielsweise Überspannungen und/oder dergleichen. Ferner ist es wünschenswert, dass aus ökonomischen sowie ökologischen Gründen nur die Energiemenge durch die Energiequelle erzeugt wird, die auch durch die Verbraucher verbraucht wird, insbesondere auch weil das Energieverteilungsnetz in der Regel nicht über eine eigene Speichermöglichkeit für elektrische Energie verfügt.

Weitere Komplikationen hinsichtlich der Energieversorgung können bei einer Kopplung der elektrischen Anlage des Freizeitfahrzeugs mit einem öffentlichen Energieversorgungsnetz auftreten.

Insgesamt ist die elektrische Energieversorgung, insbesondere im Autarkbetrieb des Freizeitfahrzeugs, das heißt, ohne Kopplung der elektrischen Anlage an ein öffentliches Energieversorgungsnetz, möglichst ohne Unterbrechung aufrechtzuerhalten.

Hieraus ergibt sich die **Aufgabe,** ein gattungsgemäßes Freizeitfahrzeug hinsichtlich seiner elektrischen Anlage derart weiterzubilden, dass die Versorgungssicherheit bezüglich elektrischer Energie verbessert werden kann.

Als Lösung wird mit der Erfindung vorgeschlagen, dass die elektrische Anlage eine mit der Steuereinheit in Kommunikationsverbindung stehende Anlagenüberwachungseinrichtung aufweist, die die Energiebereitstellung durch die Energiequelle und/oder den Energieverbrauch durch die Verbraucher betreffende Zustandsgröße überwacht und die Steuereinheit mittels eines Vorrangsignals vorrangig steuert.

Die Anlagenüberwachungseinrichtung kann als separate Baugruppe ausgebildet sein, die mit der Steuereinheit in Kommunikationsverbindung steht. Sie kann beispielsweise über eine drahtlose oder auch eine leitungsgebundene Kommunikationsverbindung mit der Steuereinheit verbunden sein. Das Vorrangsignal kann beispielsweise ein elektrisches und/oder ein optisches Signal sein, welches es erlaubt, die Steuereinheit entsprechend anzusteuern. Die Steuereinheit selbst kann hierfür Steuerelemente aufweisen, die es erlauben, den wenigstens einen Verbraucher hinsichtlich seiner Energieversorgung zu steuern. Dieses kann beispielsweise durch elektrische Schalter, insbesondere elektromechanische Schalter, Halbleiterschalter, aber auch diskret oder kontinuierlich einstellbare Energieflusssteuerungsmittel wie Längsregler erfolgen. Letztere können beispielsweise Längsregler, Schaltregler oder dergleichen sein, die es erlauben, den Energiefluss zum Verbraucher in vorgebbarer Weise einzustellen. Vorzugsweise sind die Steuerelemente in einer zentralen Baugruppe zusammengefasst, so dass eine einfache konstruktive Ausgestaltung erreicht werden kann. Darüber hinaus kann die Steuereinheit auch Sicherungselemente wie Leitungsschutzeinrichtungen, Überspannungsschutzeinrichtungen und/oder dergleichen umfassen. Beispielsweise kann vorgesehen sein, dass ein Steuerelement der Steuereinheit einem oder mehreren Betätigungselementen zugeordnet ist. So kann beispielsweise vorgesehen sein, dass mit einem Steuerelement ein Verbraucher in Form einer Lampe gesteuert wird, indem das diesem Steuerelement zugeordnete Betätigungselement manuell betätigt wird, beispielsweise durch zwei parallelgeschaltete elektromechanische Schalter, die an verschiedenen Stellen des Freizeitfahrzeugs angeordnet sind. Das Betätigungselement selbst kann beispielsweise in Form eines manuell betätigbaren Schalters, eines Tasters, eines Sensorschalters oder dergleichen ausgebildet sein. Das Betätigungselement kann ebenfalls über eine leitungsgebundene oder auch über eine drahtlose Kommunikationsverbindung mit der Steuereinheit verbunden sein. Natürlich können auch bei Bedarf einzelne Steuerelemente der Steuereinheit an räumlich unterschiedlichen Stellen des Freizeitfahrzeugs angeordnet sein. Die Steuereinheit kann darüber hinaus eine Steuerlogik, beispielsweise in Form einer Hardware-Schaltung und/oder einem Mikroprozessor mit einem Computerprogramm, gebildet sein. Dies erlaubt es, einzelne Steuerelemente der Steuereinheit in bestimmten Abhängigkeiten untereinander ansteuern zu können. Die Steuerelemente können beispielsweise durch Relais, Transistoren, Tyristoren, GTO's, TRIAC's oder dergleichen gebildet sein.

Zur Überwachung der Zustandsgröße, insbesondere bezüglich der Energiebereitstellung und/oder des Energieverbrauchs kann die Anlagenüberwachungseinrichtung Messmittel, insbesondere Sensoren aufweisen, mit denen ein Energiefluss von der Energiequelle zu den Verbrauchern erfasst, insbesondere quantifiziert werden kann. Natürlich kann die Anlagenüberwachungseinrichtung auch Vergleiche mit vorgebbaren Parametern oder dergleichen vornehmen. Die Zustandsgröße kann zum Beispiel der elektrische Strom, die elektrische Spannung, eine Frequenz, eine Temperatur, ein Energiefluss, eine Leistung oder dergleichen sein. Natürlich kann auch vorgesehen sein, dass zwei oder mehrere Zustandsgrößen überwacht werden. Aufgrund der erfassten Werte der Energiebereitstellung und des Energieverbrauchs erzeugt die Anlagenüberwachungseinrichtung ein Steuersignal, welches an die Steuereinheit übermittelt wird. Die Anlagenüberwachungseinrichtung kann als Vorrangsignal beispielsweise ein elektrisches Steuersignal, insbesondere ein digitales Steuersignal erzeugen, welches an die Steuereinheit übermittelt wird. Darüber hinaus kann auch ein analoges Vorrangsignal vorgesehen sein. Das Vorrangsignal kann eine oder mehrere Informationen enthalten, die von der Steuereinheit ausgewertet werden können. Hierfür kann die Steuereinheit eine Empfangseinheit aufweisen, die es erlaubt, das Vorrangsignal zu empfangen und hinsichtlich seiner Informationen auszuwerten. Entsprechend der gewonnenen Informationen wird die Steuereinheit vorrangig gesteuert, das heißt, dass aufgrund des Vorrangsignals der Anlagenüberwachungseinrichtung Steuersignale von Betätigungselementen im Konfliktfall deaktiviert werden und die entsprechenden Steuerelemente aufgrund des Vorrangsignals der Anlagenüberwachungseinrichtung gesteuert werden. Das Vorrangsignal der Anlagenüberwachungseinrichtung ist somit vorrangig gegenüber einem Steuersignal eines Betätigungselements. Natürlich können auch Verbraucher vorgesehen sein, die durch die Steuereinheit nicht gesteuert werden, beispielsweise eine Einrichtung, mit der unverzichtbare Basisfunktionen bereitgestellt werden, wie zum Beispiel der Betrieb eines Kühlgeräts oder dergleichen. Darüber hinaus kann vorgesehen sein, dass entweder ein Teil der Verbraucher oder alle Verbraucher hinsichtlich des Energieverbrauchs durch die Anlagenüberwachungseinrichtung überwacht werden.

Die Anlagenüberwachungseinrichtung kann als separate Baugruppe ausgebildet sein, um eine einfache Verbindung mit der elektrischen Anlage, insbesondere mit der Steuereinheit herstellen zu können. Darüber hinaus erlaubt es diese Ausgestaltung, ein einfaches Nachrüsten von elektrischen Anlagen bestehender Freizeitfahrzeuge zu ermöglichen. Die Anlagenüberwachungseinrichtung kann als elektronische Baugruppe ausgebildet sein, die mit einer Hardware-Schaltung und/oder einem Mikrocomputer versehen ist. Der Mikrocomputer wird durch ein Rechnerprogramm gesteuert. Weiterhin kann vorgesehen sein, dass die Anlagenüberwachungseinrichtung programmierbar ist, so dass einzelne Funktionen der Anlagenüberwachungseinrichtung bedarfsgerecht und individuell eingestellt werden können. Es kann vorgesehen sein, dass zum Beispiel Parameter eingegeben werden können, die die Funktion der Anlagenüberwachungseinrichtung steuern. Hierfür kann die Anlagenüberwachungseinrichtung eine Eingabeeinheit aufweisen, mittels der die entsprechenden Programmierungen und Eingaben vorgenommen werden können. Darüber hinaus kann die Anlagenüberwachungseinrichtung auch eine Schnittstelle aufweisen, über die sie mit einer Programmiereinrichtung, einem tragbaren Rechner oder dergleichen zwecks Programmierung und/oder Eingabe von Parametern verbunden werden kann. Weiterhin kann die Anlagenüberwachungseinrichtung eine Ausgabeeinheit aufweisen, über die aktuelle Parameter und Programmierungen abgefragt werden können. Dies erlaubt es, eine hochflexible Anlagenüberwachungseinrichtung zu schaffen, die individuell an den Bedarf angepasst werden kann.

Natürlich kann auch vorgesehen sein, dass die Anlagenüberwachungseinrichtung über die elektrische Anlage und hier insbesondere über die Steuereinheit programmierbar ist. So kann beispielsweise vorgesehen sein, dass die Kommunikationsverbindung zwischen Steuereinheit und Anlagenüberwachungseinrichtung derart ausgebildet ist, dass die Anlagenüberwachungseinrichtung nicht nur ein Vorrangsignal an die Steuereinheit übermittelt, sondern in umgekehrter Richtung auch einzugebende Parameter und Programmierbefehle von der Steuereinrichtung an die Anlagenüberwachungseinrichtung übermittelt werden können. Dies erlaubt es, Ein- und/oder Ausgabeeinheiten der Steuereinheit beziehungsweise der elektrischen Anlage ebenfalls für die Einrichtung der Anlagenüberwachungseinrichtung zu verwenden.

In einer Ausgestaltung kann vorgesehen sein, dass eine Programmierung beziehungsweise Eingabe eines Parameters in die Anlagenüberwachungseinrichtung mittels eines an der Steuereinheit angeschlossenen Betätigungselements erfolgen kann. Eine Ausgabe kann beispielsweise über eine mit der elektrischen Anlage verbundene Anzeigeneinrichtung erfolgen.

Die Energiequelle kann neben einem öffentlichen Energieversorgungsnetz eine lokale, insbesondere autarke Energiequelle sein, beispielsweise ein motorbetriebenes Stromaggregat, eine Solarzelle, ein Windrad oder dergleichen. Natürlich können auch mehrere, unterschiedliche Energiequellen miteinander gekoppelt sein. Vorzugsweise sind die Energiequellen einzeln und unabhängig voneinander an das Energieverteilungsnetz angeschlossen. So kann ein unabhängiges Steuern der Energiequellen durch die Steuereinheit erreicht werden. Insbesondere kann vorgesehen sein, dass die Steuereinheit die Energiequellen unabhängig voneinander hinsichtlich der Energiebereitstellung in der elektrischen Anlage steuern kann.

Weiterhin kann die elektrische Anlage einen BUS aufweisen, mit dem die Kommunikationsverbindungen hergestellt werden. Der BUS kann beispielsweise durch einen USB-BUS, einen IEEE-BUS, einen IDE-BUS oder dergleichen gebildet sein. An dem BUS können nicht nur Betätigungselemente sondern auch die Steuereinheit, die Anlagenüberwachungseinrichtung sowie weitere angeschlossen sein. Insbesondere kann natürlich ein bereits im Freizeitfahrzeug vorhandener BUS zum Einsatz kommen, um die Kommunikationsverbindungen zumindest teilweise herzustellen.

Eine bevorzugte Ausgestaltung sieht vor, dass die Energiequelle eine Brennstoffzelle aufweist. Mit der Brennstoffzelle kann autark elektrische Energie erzeugt werden, wobei ein hoher Wirkungsgrad der Erzeugung elektrischer Energie in Verbindung mit geringen Emissionen erreichbar ist. Die Brennstoffzelle kann auch für den Antrieb des Freizeitfahrzeugs beziehungsweise zur Unterstützung des Antriebs vorgesehen sein. Es kann vorgesehen sein, dass die Brennstoffzelle mit einem Gas beziehungsweise einem Stoff in flüssiger Phase, beispielsweise Wasserstoff, einem Kohlenwasserstoff, Methanol oder dergleichen als Energieträger betreibbar ist. Der Energieträger kann in einem separaten Tank gelagert und über eine steuerbare Zuleitung zur Brennstoffzelle geführt sein. Vorzugsweise ist die Zuleitung mit einem steuerbaren Ventil ausgerüstet, welches an der Steuereinheit angeschlossen und von dieser steuerbar ist. So kann mittels der Steuereinheit eine Steuerung der Brennstoffzelle derart erreicht werden, dass lediglich die für den Betrieb der aktiven Verbraucher erforderliche Energie bereitgestellt wird. Für den Betrieb der Brennstoffzelle erweist sich die Anlagenüberwachungseinrichtung als vorteilhaft, weil bei Änderungen des Energieverbrauchs durch die Verbraucher eine übergeordnete Steuerung gewährleistet werden kann, die die Erzeugung von elektrischer Energie durch die Brennstoffzelle anpassen kann. Da die Brennstoffzelle auf Änderungen der Brennstoffzufuhr vergleichsweise träge reagiert und demzufolge auch die Energieerzeugung der Brennstoffzelle träge reagiert, kann die Anlagenüberwachungseinrichtung einen oder mehrere Verbraucher mittels des Vorrangsignals vorrangig derart steuern, dass sie entweder keine Energie oder weniger Energie als für ihren bestimmungsgemäßen Betrieb erforderlich, zugeteilt bekommen. Hierdurch kann eine Überlastung der Brennstoffzelle und eine damit einhergehende Gefahr einer Störung der elektrischen Energieversorgung reduziert werden.

Die Brennstoffzelle kann am Freizeitfahrzeug selbst angeordnet sein, sie kann aber auch als separate Baueinheit derart ausgebildet sein, dass sie in einem vorgebbaren Abstand vom Freizeitfahrzeug aufgestellt werden kann. Die Brennstoffzelle kann ein eigenes, insbesondere wetterfestes Gehäuse aufweisen, so dass ein hinreichend guter Schutz vor äußeren Einwirkungen, beispielsweise Wettereinwirkungen, mechanische Einwirkungen oder dergleichen erreicht werden kann.

Darüber hinaus kann vorgesehen sein, dass die Energiequelle einen elektrischen Energiespeicher aufweist. Vorzugsweise ist der elektrische Energiespeicher ebenfalls an das Energieverteilungsnetz angeschlossen, und zwar insbesondere separat von anderen Energiequellen, so dass mit dem Energiespeicher Leistungsschwankungen im Energieverteilungsnetz abgefangen werden können. Darüber hinaus kann der Energiespeicher derart ausgelegt sein, dass er für einen vorgebbaren Zeitraum die Versorgung des Freizeitfahrzeugs mit elektrischer Energie unabhängig von weiteren Energiequellen sicherstellen kann. Der elektrische Energiespeicher kann als insbesondere aufladbare Batterie, als Kondensator, Mischformen hiervon, Baugruppen aus Batterien, Akkumulatoren und/oder dergleichen gebildet sein. Der Energiespeicher ist vorzugsweise als separate Baugruppe ausgebildet und mit dem Freizeitfahrzeug verbunden. Insbesondere für Wartungszwecke kann vorgesehen sein, dass der Energiespeicher in einem eigens hierfür vorgesehenen Einschub, Schublade oder dergleichen angeordnet ist, die ein einfaches Austauschen beziehungsweise Warten des Energiespeichers ermöglichen. Die Steuereinheit kann darüber hinaus eine Ladeeinrichtung aufweisen, die es erlaubt, den Energiespeicher zu vorgebbaren Zeitpunkten oder Betriebssituationen der elektrischen Anlage mit elektrischer Energie zu beaufschlagen, so dass dieser geladen wird. Natürlich kann auch vorgesehen sein, dass der Energiespeicher direkt mit der Energiequelle gekoppelt ist, beispielsweise in Form einer Parallelschaltung oder dergleichen. Mit dem Energiespeicher können Versorgungslücken der elektrischen Energieversorgung überbrückt werden, beispielsweise wenn der Energieverbrauch durch die Verbraucher die Energiebereitstellung durch die Energiequelle übersteigt oder die Energiequelle keine elektrische Energie liefert. Insbesondere bei Energiequellen, die auf regenerative Energieträger zugrückgreifen, beispielsweise Solarzellen, Windräder oder dergleichen kann mit dem Energiespeicher eine kontinuierliche Energieversorgung gesichert werden. Darüber hinaus erweist sich der Energiespeicher auch im Zusammenhang mit einer Brennstoffzelle als vorteilhaft, da diese, wie oben ausgeführt, vergleichsweise träge auf Leistungsschwankungen reagiert und Leistungsschwankungen durch den Energiespeicher abgefangen werden können. Insbesondere kann auch zu viel erzeugte Energie im Energiespeicher gespeichert werden.

Die Steuereinheit kann auch eine Vergleichseinheit aufweisen, mit der ein oder mehre Verbraucher hinsichtlich des Energieverbrauchs geregelt werden können. Hierzu können Vergleichswerte in der Steuereinheit vorhanden sein, die mit erfassten Werten für den Energieverbrauch der Verbraucher verglichen werden und der Energieverbrauch nachgeführt wird. So können beispielsweise Sanftanläufe für Motoren und Leuchten realisiert werden. Der Vergleichswert kann ein vorgebbarer Wert sein. Er kann beispielsweise durch das Betätigungselement vorgegeben sein. Darüber hinaus kann die Steuereinheit auch weitere Logikfunktionen aufweisen, die es erlauben, einen, mehrere oder alle Verbraucher nach vorgebbaren Kriterium mit elektrischer Energie zu versorgen. Hierfür kann die Steuereinheit eine Logikbaugruppe aufweisen, die eine Hardware-Schaltung, einen Mikrocomputer und/oder dergleichen umfassen kann. Vorzugsweise ist diese Logikbaugruppe programmierbar ausgebildet. Hierfür kann die Steuereinheit Ein- und/oder Ausgabemittel aufweisen, die einen Zugriff auf Parameter und Programmelemente erlauben. So können zum Beispiel auch Verknüpfungen von unterschiedlichen Zustandsgrößen, Parametern und/oder dergleichen realisiert werden. Natürlich kann die Steuereinheit auch Meldemittel umfassen, beispielsweise um eine Meldung zu erzeugen, wenn durch die Anlagenüberwachungseinrichtung ein Vorrangsignal auf den Betrieb der Verbraucher einwirkt. Beispielsweise kann ein Meldesignal erzeugt werden, wenn das Steuersignal Verbraucher abschaltet beziehungsweise deren Energieverbrauch reduziert. Als Meldemittel kann ein Summer, Lautsprecher oder auch eine optische Anzeige, eine alphanummerische Anzeige oder dergleichen, beispielsweise auf LCD-Basis, Leuchtdioden-Basis oder ähnlichem in Betracht kommen.

Eine Weiterbildung sieht vor, dass das Freizeitfahrzeug eine Wasserrückgewinnungseinheit für die Brennstoffzelle aufweist. Mit der Wasserrückgewinnungseinheit kann Wasser aus den Verbrennungsprodukten der Brennstoffzelle zurückgewonnen werden. Dieses Wasser kann beispielsweise gesammelt werden oder auch einem Tank für eine Wasserversorgung des Freizeitfahrzeugs zugeführt werden. Insbesondere in Regionen mit schlechter Wasserversorgung kann auf diese Weise die Versorgung mit Wasser, insbesondere mit Trinkwasser verbessert werden. Vorteilhaft ist dies insbesondere bei Einsatz des Freizeitfahrzeugs in trockenen Regionen, beispielsweise in semiariden oder ariden Klimazonen.

Eine vorteilhafte Weiterbildung sieht vor, dass das Freizeitfahrzeug einen Wärmetauscher aufweist, mittels dem die Brennstoffzelle, der elektrische Energiespeicher und/oder ein Wohnaufbau des Freizeitfahrzeugs thermisch gekoppelt sind. Dies erlaubt es, Abwärme der Brennstoffzelle und/oder des Energiespeichers zum Beheizen des Wohnaufbaus zu nutzen. Darüber hinaus kann auch vorgesehen sein, dass bei niedrigen Umgebungstemperaturen die Abwärme genutzt wird, um den Energiespeicher in einen günstigen Temperaturbereich zu bringen, indem er eine möglichst große Kapazität für elektrische Energie aufweist. So kann auf einfache Weise eine Beheizung bereitgestellt werden. Der Wärmetauscher kann durch einen Röhrenwärmetauscher oder dergleichen gebildet sein. Der Wärmetauscher kann im Kreuz- oder Gegenstrom durchströmt sein, um die Wärme von einem Medium auf das andere Medium zu übertragen. So kann vorgesehen sein, dass die Verbrennungsprodukte der Brennstoffzelle durch einen Kanal des Wärmetauschers geführt werden und ihre Wärme an ein Wärmemedium, beispielsweise Luft, eines weiteren Kanals des Wärmetauschers abgibt, wobei die erwärmte Luft dann in den Wohnaufbau des Freizeitfahrzeugs geführt wird. Insbesondere kann eine Vorwärmung von dem Wohnaufbau zuzuführender Frischluft erreicht werden.

Mit der Erfindung wird ferner ein Verfahren zum Betrieb einer elektrischen Anlage eines Freizeitfahrzeugs vorgeschlagen, die ein Energieverteilungsnetz, eine an das Energieverteilungsnetz angeschlossene Energiequelle sowie mehrere an das Energieverteilungsnetz angeschlossene Verbraucher aufweist, wobei die Verbraucher von der Energiequelle über das Energieverteilungsnetz mit elektrischer Energie versorgt werden, wobei der Energiefluss von der Energiequelle zu wenigstens einem der Verbraucher mittels einer durch ein Steuersignal eines Betätigungselements gesteuerten Steuereinheit gesteuert wird. Erfindungsgemäß wird mittels einer Anlagenüberwachungseinrichtung eine die Energiebereitstellung durch die Energiequelle und/oder dem Energieverbrauch durch die Verbraucher betreffende Zustandsgröße überwacht und bei Eintreten eines vorgebbaren Ereignisses ein Vorrangsignal an die Steuereinheit übermittelt, wobei die Steuereinheit den wenigstens einen Verbraucher unabhängig vom Steuersignal aufgrund des Vorrangsignals steuert.

Die Anlagenüberwachungseinrichtung ermöglicht hinsichtlich der Energieversorgung eine erhöhte Zuverlässigkeit, indem bei Energieengpässen der Energieverbrauch von einem oder mehreren Verbrauchern reduziert oder abgeschaltet werden kann. Dies erlaubt es, andere Verbraucher, deren Betrieb eine höhere Priorität aufweist als die anderen Verbraucher, für einen verlängerten Zeitraum mit Energie zu versorgen. Beispielsweise kann vorgesehen sein, dass bei einem Windrad als Energiequelle ein Teil von Leuchten als Verbraucher abgeschaltet wird, wenn eine vorgebbare Windgeschwindigkeit unterschritten wird. Auf diese Weise kann eine Art Notbeleuchtung erreicht werden, die eine hinreichende Sicht innerhalb des Freizeitfahrzeugs bei niedrigem Energieverbrauch erlaubt. Es kann auch vorgesehen sein, dass beispielsweise ein Kühlgerät eine hohe Priorität zugewiesen bekommt und somit bevorzugt mit elektrischer Energie versorgt wird. Sinkt die bereitgestellte Energie unter einen aktuellen Energieverbrauch durch die Verbraucher, kann vorgesehen sein, dass sämtliche anderen Verbraucher außer dem Kühlgerät abgeschaltet werden, so dass eine Kühlfunktion nach wie vor gewährleistet ist. Mittels des Vorrangsignals wird die Steuereinheit entsprechend gesteuert, so dass die übrigen Verbraucher abgeschaltet werden, und zwar unabhängig von einem Steuersignal eines Betätigungselements. Die Steuereinheit ist vorzugsweise Teil des Energieverteilungsnetzes, beispielsweise als zentrale Baugruppe ausgebildet, an der die Energiequelle und die Verbraucher angeschlossen werden können. Ebenso kann vorgesehen sein, dass die Betätigungselemente an der Steuereinheit angeschlossen sein können. Die Steuereinheit ist in diesem Fall als zentrale Baugruppe ausgebildet, so dass das Freizeitfahrzeug auf einfache Weise mit einer elektrischen Anlage der Erfindung ausgerüstet werden kann. Die Anlagenüberwachungseinrichtung kann als separate Baugruppe ausgebildet sein, die an die Steuereinheit angeschlossen werden kann. Sie kann aber auch einstückig mit der Steuereinheit ausgebildet sein. Die Anlagenüberwachungseinrichtung kann eigene Messmittel aufweisen, mit denen die die Energiebereitstellung durch die Energiequelle und/oder den Energieverbrauch durch die Verbraucher betreffende Zustandsgröße überwacht werden kann. Es können aber auch Messmittel verwendet werden, die bereits in der elektrischen Anlage, insbesondere dem Energieverteilungsnetz, vorzugsweise der Steuereinheit angeordnet sind. Hierdurch können separate Messmittel eingespart werden. Ein Ereignis kann zum Beispiel das Zu- oder Abschalten der Energieversorgung, beispielsweise Ausfall eines Stromaggregats, Windstille bei einem Windrad als Energiequelle oder dergleichen, oder auch durch Kombinationen von Einzelereignissen gebildet sein. Das Ereignis kann auch ein Erreichen oder Überschreiten eines Vergleichswerts durch einen erfassten Wert insbesondere einer Zustandsgröße oder dergleichen sein. Das Ereignis kann beispielsweise das Feststellen einer Überlastsituation sein, bei der durch die Verbraucher mehr elektrische Energie verbraucht wird, als durch die Energiequelle bereitgestellt werden kann. Es kann aber auch das Erreichen eines einstellbaren Vergleichswertes sein, beispielsweise für eine Temperatur, einen Ladungszustand oder dergleichen.

Es kann vorgesehen sein, dass die Steuereinheit ein eigenes Gehäuse aufweist, an dem Anschlussklemmen oder dergleichen für die Energiequelle und die Verbraucher sowie die Betätigungselemente als auch die Anlagenüberwachungseinrichtung vorgesehen sind. Die Steuereinheit kann eine separate Signalverarbeitung für das Vorrangsignal umfassen, so dass eine zuverlässige Funktion auch dann gewährleistet werden kann, wenn ein Betätigungselement für einen Verbraucher gestört ist, deaktiviert ist oder dergleichen.

Weiterhin wird vorgeschlagen, dass unter den Verbrauchern wenigstens ein aufgrund des Vorrangsignals zu steuernder Verbraucher ausgewählt wird. Diese Ausgestaltung erlaubt es, die Steuereinheit derart einzustellen, dass vorgebbare Verbraucher aufgrund des Vorrangsignals gesteuert werden. Andere Verbraucher dagegen können unbeeinflusst von dem Vorrangsignal durch die Steuereinheit aufgrund des Betätigungselements oder dergleichen weiterhin mit elektrischer Energie versorgt werden. Dies ermöglicht es, die Erfindung individuell bedarfsgerecht anzupassen. So kann vorgesehen sein, dass die Steuereinheit die Energieversorgung für ein Kühlgerät nicht beeinflusst beziehungsweise unabhängig von dem Vorrangsignal vorsieht. Für weitere Verbraucher, wie Leuchten, eine elektrische Heizung oder dergleichen kann dagegen ein Abschalten beziehungsweise eine Leistungsreduktion vorgesehen sein, so dass eine Überlastung der Energiequelle vermieden werden kann. Darüber hinaus kann natürlich auch vorgesehen sein, dass die Energiequelle aufgrund des Vorrangsignals gesteuert wird. So kann vorgesehen sein, dass bei einer Überlastfunktion die Energiequelle zur Freigabe weiterer Leistungsreserven veranlasst wird. Es kann auch die Zuschaltung weiterer Energiequellen, insbesondere durch die Steuereinheit veranlasst werden.

Eine Ausgestaltung sieht vor, dass mehrere Vorrangsignale für unterschiedliche Ereignisse verwendet werden.

Es kann beispielsweise vorgesehen sein, dass unterschiedliche Ereignisse durch unterschiedliche Vergleichswerte eines Betriebszustands als Zustandsgröße gebildet sind. So kann vorgesehen sein, dass bei einer 80%-igen Auslastung der Energiequelle einzelne Verbraucher, beispielsweise Hintergrundbeleuchtungen und dergleichen abgeschaltet werden. Bei einem zweiten Vergleichswert, beispielsweise 90% der Auslastung der Energiequelle kann eine Reduzierung einer elektrischen Heizleistung vorgesehen sein. Weitere Ereignisse können beliebig vorgesehen und miteinander kombiniert werden. So kann beispielsweise vorgesehen sein, dass das Ereignis vom Erreichen zweier Vergleichswerte unterschiedlicher Zustandsgrößen abhängig ist.

Eine Weiterbildung sieht vor, dass ein elektrischer Energiespeicher verwendet wird, dessen Energiefluss durch die Steuereinheit gesteuert wird. Der Energiespeicher kann zum Beispiel hinsichtlich wenigstens einer Zustandsgröße wie seiner elektrischen Spannung, seiner Temperatur, seiner Kapazität, seiner aktuellen Ladung oder dergleichen überwacht werden. Vorzugsweise ist hierfür wenigstens ein Sensor vorgesehen, der mit der Anlagenüberwachungseinrichtung in Kommunikationsverbindung steht. Es können Ereignisse vorgegeben werden, beispielsweise in Form von Vergleichswerten für die jeweilige Zustandsgröße, die im Ereignisfall das Erzeugen eines Vorrangsignals zur Folge haben. Hierfür kann die Anlagenüberwachungseinrichtung entsprechend programmiert sein. Natürlich können auch weitere Zustandsgrößen, beispielsweise der Energieverbrauch der Verbraucher sowie auch die Energiebereitstellung der Energiequelle überwacht werden und in die Erzeugung des Vorrangsignals einfließen. Weitere Zustandsgrößen können beispielsweise die Windgeschwindigkeit sein, wenn als Energiequelle ein Windrad zum Einsatz kommt, die Lichtstärke, wenn Solarzellen als Energiequelle zum Einsatz kommen, oder dergleichen. Natürlich können die unterschiedlichen Zustandsgrößen sowie deren Erfassung auch miteinander bedarfsgerecht kombiniert werden. Der Fachmann wird hier eine geeignete Auswahl anhand der individuell vorliegenden elektrischen Anlage treffen und entsprechende Sensoren für die Zustandsgrößen vorsehen. Er wird darüber hinaus für die Anlagenüberwachungsvorrichtung geeignete Verknüpfungen vorgeben, die Ereignisse repräsentieren, die auf den gemessenen Werten der Zustandsgrößen basieren. Hieraus werden dann ein oder mehrere Vorrangsignale generiert, die an die Steuereinheit übermittelt werden.

Vorzugsweise ist die Ladeeinrichtung für den Energiespeicher durch die Steuereinrichtung steuerbar. Insbesondere ist sie auch durch das Vorrangsignal steuerbar, so dass die Ladeeinrichtung vorzugsweise dann aktiviert wird, wenn die elektrische Energiequelle hinreichend elektrische Energie für die Versorgung der Verbraucher liefert und einen Überschuss bereitstellt oder eine externe Energiequelle, beispielsweise ein öffentliches Energieversorgungsnetz angeschlossen ist. Vorzugsweise wird die Steuereinheit in Abhängigkeit einer Zustandsgröße der Energiequelle gesteuert. So kann vorgesehen sein, dass die Steuereinheit in Abhängigkeit eines vorgebbaren Ladezustands des Energiespeichers gesteuert wird. Als Ereignis ist dann das Erreichen eines Ladezustands von beispielsweise 25% zu sehen, bei dessen Erreichen beziehungsweise Unterschreiten durch die Anlagenüberwachungseinrichtung ein Vorrangsignal erzeugt wird, durch welches eine zuvor ausgewählte Anzahl von Verbrauchern abgeschaltet wird beziehungsweise hinsichtlich der Leistungsaufnahme reduziert wird. Darüber hinaus kann ein weiteres Ereignis vorgesehen sein, beispielsweise das Erreichen eines weiteren Vergleichswerts der Zustandsgröße, zum Beispiel das Erreichen des Ladezustands von 15%, wobei durch die Anlagenüberwachungseinrichtung ein weiteres Vorrangsignal erzeugt werden kann, welches bei der Steuereinheit dazu führt, dass sämtliche weiteren Verbraucher außer einem Kühlgerät abgeschaltet werden. Dies erlaubt es, grundlegende und/oder sicherheitsrelevante Verbraucher möglichst lange in Betrieb zu halten.

Gemäß einer Ausführungsform ist vorgesehen, dass das Steuern des Verbrauchers in Abhängigkeit des Vorrangsignals angezeigt und/oder gemeldet wird. Dies erlaubt es, zu erkennen, dass das Vorrangsignal auf den Verbraucher einwirkt. Das Anzeigen beziehungsweise Melden kann beispielsweise über das Betätigungselement erfolgen. Darüber hinaus kann auch ein separates Anzeigefeld vorgesehen sein, auf dem das Einwirken des Vorrangsignals auf die Verbraucher dargestellt wird. Darüber hinaus kann auch das das Vorrangsignal auslösende Ereignis angezeigt werden. Eine Meldung kann beispielsweise durch ein akustisches oder optisches Signal erfolgen, indem mittels eines Summers oder dergleichen ein akustischer Signalton abgegeben wird, eine Betriebsleuchte aktiviert wird oder dergleichen.

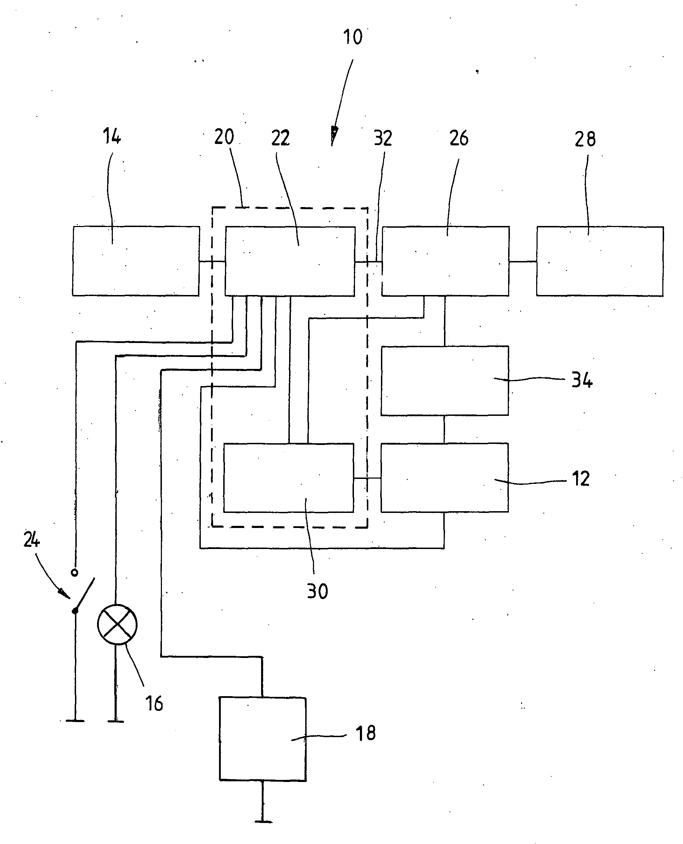

Weitere Vorteile und Merkmale sind der folgenden Beschreibung eines Ausführungsbeispiels zu entnehmen. Im Wesentlichen gleichbleibende Bauteile sind mit den gleichen Bezugszeichen bezeichnet. Die Zeichnung ist eine Schemazeichnung und dient lediglich der Erläuterung des folgenden Ausführungsbeispiels.

Es zeigt die einzige Figur, ein schematisches Blockschaltbild einer elektrischen Anlage eines Freizeitfahrzeugs.

Aus der einzigen Figur ist schematisch ein Blockdiagramm für eine elektrische Anlage 10 eines nicht dargestellten Freizeitfahrzeugs ersichtlich. Diese weist als Energiequelle einen Akkumulator 12 sowie ein Netzteil 14 auf, welches Netzteil 14 mit einem öffentlichen Energieversorgungsnetz gekoppelt werden kann. Ferner sind zwei Verbraucher, und zwar eine Leuchte 16 sowie ein Kühlgerät 18 vorgesehen, wobei das Netzteil 14, der Akkumulator 12, die Leuchte 16 sowie das Kühlgerät 18 an einem Energieverteilungsnetz 20 angeschlossen sind. Ferner umfasst die elektrische Anlage 10 eine Steuereinheit 22 zum Steuern des Energieflusses von dem Akkumulator 12 und/oder dem Netzteil 14 zu wenigstens der Leuchte 16 und/oder dem Kühlgerät 18. Vorliegend ist die Steuereinheit 22 Bestandteil des Energieversorgungsnetzes 20 und stellt die Anschlüsse zum Anschluss der an dem Energieverteilungsnetz 20 angeschlossenen Geräte bereit. An der Steuereinheit 22 ist ferner ein elektrischer Schalter 24 als Betätigungselement für die Leuchte 16 angeschlossen. Der Schalter 24 ist vorliegend als Sensorschalter ausgebildet und liefert über eine leitungsgebundene Verbindung zu der Steuereinheit 22 ein Steuersignal, mittels welchem die Leuchte 16 über ein nicht näher bezeichnetes und dargestelltes Steuerelement der Steuereinheit 22 gesteuert wird.

In der vorliegenden Ausgestaltung ist vorgesehen, dass das Kühlgerät 18 über das Energieverteilungsnetz 20 und die Steuereinheit 22 permanent mit dem Akkumulator 12 beziehungsweise dem Netzteil 14 gekoppelt ist, so dass das Kühlgerät 18 kontinuierlich mit elektrischer Energie versorgt werden kann.

Die elektrische Anlage 10 weist ferner eine Anlagenüberwachungseinrichtung 26 auf, die über eine leitungsgebundene Schnittstelle 32, die vorliegend als IDE-BUS ausgebildet ist, mit der Steuereinheit 22 in Kommunikationsverbindung steht.

Die Steuereinheit 22 ist als zentrale Baugruppe ausgebildet, an der sämtliche Verbraucher und Energiequellen sowie auch Betätigungselemente angeschlossen sind.

Die Anlagenüberwachungseinrichtung 26 ist ebenfalls als kompakte einstückige Baugruppe ausgebildet, die über die Schnittstelle 32 an der Steuereinheit 22 angeschlossen ist.

An die Anlagenüberwachungseinrichtung 26 ist ein Ladezustandsensor 34 angeschlossen, der vorliegend mit dem Akkumulator 12 verbunden ist und dessen Ladezustand erfasst. Ein dem Ladezustand des Akkumulators 12 entsprechendes Signal wird an die Anlagenüberwachungseinrichtung 26 über eine Anschlussleitung übermittelt. Die Anlagenüberwachungseinrichtung 26 weist eine nicht näher bezeichnete Rechnereinheit auf, die das Signal des Ladezustandsensors 34 auswertet, das heißt, die Energiebereitstellung durch den Akkumulator 12 überwacht. Die Anlagenüberwachungseinrichtung 26 vergleicht den erfassten Wert des Ladezustands mit einem vorgegebenen Vergleichswert, der durch einen Nutzer individuell an der Anlagenüberwachungseinrichtung 26 eingestellt werden kann. Wird der vorgegebene Ladezustand, zum Beispiel 20%, unterschritten, erzeugt die Anlagenüberwachungseinrichtung 26 ein Vorrangsignal, welches über die Schnittstelle 32 an die Steuereinheit 22 übermittelt wird. Das Erreichen beziehungsweise Überschreiten des Vergleichswerts bildet das Ereignis des Erzeugens des Vorrangsignals.

Die Steuereinheit 22 empfängt das Vorrangsignal, wertet dieses aus und steuert die zuvor vorgegebenen Verbraucher 16, 18 in einer ebenfalls zuvor vorgegebenen Art und Weise. Vorliegend ist vorgesehen, dass das Vorrangsignal die Steuereinheit 22 veranlasst, die Leuchte 16 abzuschalten, und zwar unabhängig davon, ob die Leuchte 16 mittels des Schalters 24 aktiviert ist oder nicht. In diesem Zustand kann die Leuchte 16 auch nicht durch Betätigung des Schalters 24 aktiviert werden. Erst wenn das Vorrangsignal der Anlagenüberwachungseinrichtung 26 nicht mehr anliegt, ist die Betätigung der Leuchte 16 durch den Schalter 24 wieder freigegeben. In der vorliegenden Ausgestaltung ist ferner vorgesehen, dass die Steuereinheit 22 den aktuellen Betriebszustand der Leuchte 16 speichert und nach Wegfall des Vorrangsignals automatisch wiederherstellt. Sobald also der Ladezustand des Akkumulators 12 den zuvor definierten Vergleichswert von 20% überschreitet, wird dies durch die Anlagenüberwachungseinrichtung 26 detektiert und das Vorrangsignal abgestellt. Die Steuereinheit 22 aktiviert sodann die Leuchte 16 in dem zum Zeitpunkt des Anliegens des Vorrangsignals gegebenen Betriebszustand. Das Kühlgerät 18 wird durch das Vorrangsignal nicht beeinflusst.

Das Ereignis, welches das Vorrangsignal der Anlagenüberwachungseinrichtung 26 auslöst, ist somit das Erreichen beziehungsweise Unterschreiten des Vergleichswertes, der zuvor in die Anlagenüberwachungseinrichtung 26 eingegeben wurde. Natürlich kann auch ein anderes Ereignis definiert werden, welches das Vorrangsignal oder ein anderes, weiteres Vorrangsignal auslöst. So könnte vorgesehen sein, dass bei Unterschreiten eines weiteren Vergleichswerts von 10% aufgrund eines zweiten Vorrangsignals auch das Kühlgerät 18 abgeschaltet wird.

Das Energieverteilungsnetz 20 umfasst ferner einen Laderegler 30, über den der Akkumulator 12 mit elektrischer Energie gespeist werden kann. Der Laderegler 30 ist an den Akkumulator 12 angepasst, so dass dieser optimiert für eine möglichst schnelle Aufladung unter Berücksichtigung der Lebensdauer geladen wird.

Die Steuereinheit 22 weist nicht näher dargestellte und bezeichnete Steuerelemente auf, mittels denen die angeschlossenen Verbraucher 16, 18 sowie auch der Akkumulator 12, das Ladegerät 30 und das Netzteil 14 gesteuert werden können. Vorliegend ist vorgesehen, dass die Steuerelemente durch Transistoren gebildet sind. Daneben können aber auch Relais, Schütze, Thyristoren oder dergleichen zum Einsatz kommen. Diese Steuerelemente werden durch eine ebenfalls nicht dargestellte und bezeichnete Rechnereinrichtung gesteuert. Dies erlaubt es, die Funktion der Steuereinheit 22 weitgehend flexibel zu halten und individuell bedarfsgerecht einzurichten. So kann vorgesehen sein, dass das Vorrangsignal wie im vorliegenden Beispiel angegeben, lediglich auf ein oder mehreren von den angeschlossenen Verbrauchern einwirken kann. Im vorliegenden Fall ist vorgesehen, dass das Kühlgerät 16 von dem Vorrangsignal nicht beeinflusst wird. Lediglich die Leuchte 16 kann durch das Vorrangsignal gesteuert werden.

Über nicht näher dargestellte Eingabe- und Anzeigemittel kann eine Programmierung der Steuereinheit 22 vorgenommen und Vergleichswerte eingegeben werden.

Darüber hinaus kann ebenfalls die Anlagenüberwachungseinrichtung 26 über die Schnittstelle 32 und die Steuereinheit 22 bedarfsgerecht programmiert werden. Es können so unterschiedliche Vergleichswerte und Ereignisse definiert werden, die zum Auslösen eines oder mehrerer Vorrangsignale dienen.

An der Anlagenüberwachungseinrichtung 26 ist ferner eine Anzeigeeinheit 28 angeschlossen. Über die Anzeigeeinheit 28 kann angezeigt werden, ob und gegebenenfalls welche Verbraucher durch ein Vorrangsignal betroffen sind. Dies ermöglicht es einem Nutzer, unmittelbar zu erkennen, ob eine Einwirkung der Anlagenüberwachungseinrichtung 26 vorliegt. So können fälschlicherweise als Fehler angesehene Situationen bezüglich des Betriebs von Verbrauchern erkannt werden.

Die Steuereinheit 22 kann Funktionen wie gleichzeitiges Ab- und Wiedereinschalten, Abspeichern und Aufrufen von Schaltzuständen, logische Verknüpfungen und dergleichen vorsehen.

Ferner kann vorgesehen sein, dass die Anlagenüberwachungseinrichtung 26, die beispielsweise in Form einer Logikleiterplatte aufgebaut sein kann, über den angeschlossenen Ladezustandsensor 34 Parameter für die optimale Ladung des Akkumulators 12 übermittelt.

Besonders vorteilhaft erweist sich die Erfindung in Verbindung mit dem Einsatz einer Brennstoffzelle als Energiequelle. Durch die Erfindung kann nämlich erreicht werden, dass der Betrieb der Brennstoffzelle durch die Anlagenüberwachungseinrichtung, insbesondere in Verbindung mit dem Akkumulator 12 eine optimale Nutzung der Brennstoffzelle ermöglicht. Vorzugsweise sollte die Brennstoffzelle möglichst lange eingeschaltet sein, wenig Startvorgängen unterworfen sein und gegebenenfalls während eines Startvorgangs versorgt werden können.

Mit dem Ladezustandsensor 24 kann neben dem aktuellen Ladezustand auch die aktuelle Akkumulatorspannung, die verfügbare Akkumulatorkapazität (state of health), die Akkumulatortemperatur sowie die optimale Ladespannung des Akkumulators ermittelt beziehungsweise erfasst werden. Die entsprechenden Parameter können an den Laderegler 30 übermittelt werden.

Die Erfindung ermöglicht es einem Nutzer, zu ermitteln, wie lange bei einem aktuellen Betriebszustand der elektrischen Anlage der Betrieb gewährleistet ist. Darüber hinaus kann bei Erreichen bestimmter Zustände, beispielsweise Unterschreiten eines minimal vorgegebenen Ladezustands des Akkumulators 12, eine Notversorgung vorgesehen sein, so dass eine Nutzungsdauer wichtiger Verbraucher deutlich verlängert werden kann. Ferner kann vorgesehen sein, dass bei Erreichen eines bestimmten Ladezustands des Akkumulators 12 zusätzliche Energiequellen zugeschaltet werden, beispielsweise motorbetriebene Generatoren, Solarzellen, Windräder oder dergleichen. Über die Anzeigeeinheit 28 können dem Nutzer Informationen, insbesondere Warnhinweise gegeben werden. Eine Information könnte beispielsweise die Angabe einer Betriebsdauer für die elektrische Anlage sein. Natürlich kann auch eine Selbsttestfunktion vorgesehen sein, die neben der Steuereinheit 22 auch die Anlagenüberwachungseinrichtung 26 sowie den Akkumulator 12 umfassen kann. So könnte beispielsweise eine Information ausgegeben werden, die einem Nutzer anzeigt, dass der Akkumulator 12 auszutauschen ist.

Durch das Laden des Akkumulators 12 mit der optimalen Ladespannung kann eine kurze Ladezeit erreicht und die maximal vorhandene Kapazität des Akkumulators voll genutzt werden.

Das in der Figur dargestellte Ausführungsbeispiel dient lediglich der Erläuterung der Erfindung und ist für diese nicht beschränkend.

### Bezugszeichenliste

- 10: elektrische Anlage
- 12: Akkumulator
- 14: Netzteil
- 16: Leuchte
- 18: Kühlgerät
- 20: Energieverteilungsnetz
- 22: Steuereinheit
- 24: Schalter
- 26: Anlagenüberwachungseinrichtung
- 28: Anzeigeeinheit
- 30: Laderegler
- 32: Schnittstelle
- 34: Ladezustandsensor

## Patentansprüche

1. Freizeitfahrzeug mit einer elektrischen Anlage (10), die wenigstens eine Energiequelle (12, 14), mehrere Verbraucher (16, 18), ein Energieverteilungsnetz (20), an welchem Energieverteilungsnetz (20) die Energiequelle (12, 14) und die Verbraucher (16, 18) angeschlossen sind, und eine Steuereinheit (22) zum Steuern des Energieflusses von der Energiequelle (12, 14) zu wenigstens einem der Verbraucher (16, 18) aufweist, welche Steuereinheit (22) mittels einem mit der Steuereinheit (22) in Kommunikationsverbindung stehenden Betätigungselement (24) steuerbar ist,
**dadurch gekennzeichnet,**
**dass** die elektrische Anlage (10) eine mit der Steuereinheit (22) in Kommunikationsverbindung stehende Anlagenüberwachungseinrichtung (26) aufweist, die die Energiebereitstellung durch die Energiequelle (12, 14) und/oder den Energieverbrauch durch die Verbraucher (16, 18) betreffende Zustandsgröße überwacht und die Steuereinheit (22) mittels eines Vorrangsignals vorrangig steuert.

2. Freizeitfahrzeug nach Anspruch 1, **dadurch gekennzeichnet, dass** die Energiequelle eine Brennstoffzelle aufweist.

3. Freizeitfahrzeug nach Anspruch 1 oder 2, **dadurch gekennzeichnet, dass** die Energiequelle einen elektrischen Energiespeicher (12) aufweist.

4. Freizeitfahrzeug nach Anspruch 3, **dadurch gekennzeichnet, dass** der elektrische Energiespeicher (12) am Energieverteilungsnetz (20) angeschlossen ist.

5. Freizeitfahrzeug nach einem der Ansprüche 1 bis 4, **dadurch gekennzeichnet, dass** die Steuereinheit (22) eine Vergleichseinheit umfasst.

6. Freizeitfahrzeug nach einem der Ansprüche 2 bis 5, **gekennzeichnet durch** eine Wasserrückgewinnungseinheit für die Brennstoffzelle.

7. Freizeitfahrzeug nach einem der Ansprüche 2 bis 6, **gekennzeichnet durch** einen Wärmetauscher, mittels dem die Brennstoffzelle, der elektrische Energiespeicher (12) und/oder ein Wohnaufbau des Freizeitfahrzeugs thermisch gekoppelt sind.

8. Verfahren zum Betrieb einer elektrischen Anlage (10) eines Freizeitfahrzeugs, die ein Energieverteilungsnetz (20), eine an das Energieverteilungsnetz (20) angeschlossene Energiequelle (12, 14) sowie mehrere an das Energieverteilungsnetz (20) angeschlossene Verbraucher (16, 18) aufweist, wobei die Verbraucher (16, 18) von der Energiequelle (12, 14) über das Energieverteilungsnetz (20) mit elektrischer Energie versorgt werden, wobei der Energiefluss von der Energiequelle (12, 14) zu wenigstens einem der Verbraucher 816, 18) mittels einer durch ein Steuersignal eines Betätigungselements (24) gesteuerten Steuereinheit (22) gesteuert wird,
**dadurch gekennzeichnet,**
**dass** mittels einer Anlagenüberwachungseinrichtung (26) eine die Energiebereitstellung durch die Energiequelle (12, 14) und/oder dem Energieverbrauch durch die Verbraucher (16, 18) betreffende Zustandsgröße überwacht und bei Eintreten eines vorgebbaren Ereignisses ein Vorrangsignal an die Steuereinheit (22) übermittelt wird, wobei die Steuereinheit (22) den wenigstens einen Verbraucher (16) unabhängig vom Steuersignal aufgrund des Vorrangsignals steuert.

9. Verfahren nach Anspruch 8, **dadurch gekennzeichnet, dass** unter den Verbrauchern (16, 18) wenigstens ein aufgrund des Vorrangsignals zu steuernder Verbraucher (16) ausgewählt wird.

10. Verfahren nach Anspruch 8 oder 9, **dadurch gekennzeichnet, dass** mehrere Vorrangsignale für unterschiedliche Ereignisse verwendet werden.

11. Verfahren nach einem der Ansprüche 8 bis 10, **dadurch gekennzeichnet, dass** ein elektrischer Energiespeicher (12) verwendet wird, dessen Energiefluss durch die Steuereinheit (22) gesteuert wird.

12. Verfahren nach einem der Ansprüche 8 bis 11, **dadurch gekennzeichnet, dass** die Steuereinheit (22) in Abhängigkeit einer Zustandsgröße der Energiequelle (12, 14) gesteuert wird.

13. Verfahren nach einem der Ansprüche 8 bis 12, **dadurch gekennzeichnet, dass** das Steuern des Verbrauchers (16) in Abhängigkeit des Vorrangsignals angezeigt und/oder gemeldet wird.
